**Europäisches Patentamt**

**European Patent Office**

**Office européen des brevets**

(11) Veröffentlichungsnummer: **0 241 784 B1**

(12) **EUROPÄISCHE PATENTSCHRIFT**

(45) Veröffentlichungstag der Patentschrift: **04.12.91**

(51) Int. Cl.⁵: **H04L 13/08**, H04L 17/00

(21) Anmeldenummer: **87104504.3**

(22) Anmeldetag: **26.03.87**

(54) **Anordnung zum Übertragen von Daten.**

(30) Priorität: **18.04.86 DE 3613182**

(43) Veröffentlichungstag der Anmeldung:
**21.10.87 Patentblatt 87/43**

(45) Bekanntmachung des Hinweises auf die
Patenterteilung:
**04.12.91 Patentblatt 91/49**

(84) Benannte Vertragsstaaten:
**CH DE ES FR GB IT LI NL SE**

(56) Entgegenhaltungen:
**DE-A- 3 306 520**
**DE-A- 3 313 384**
**DE-B- 2 634 669**
**FR-A- 2 518 780**
**GB-A- 2 078 062**

(73) Patentinhaber: **SIEMENS AKTIENGESELL-
SCHAFT
Wittelsbacherplatz 2
W-8000 München 2(DE)**

(72) Erfinder: **Sendlinger, Harald, Dipl.-Ing.
Dientzenhoferstrasse 22
W-8152 Feldkirchen-Westerham(DE)**
Erfinder: **Wiesner, Wolfgang, Dipl.-Ing.
Sonnleite 19
W-8034 Germering(DE)**

## Beschreibung

Die Erfindung bezieht sich auf eine Anordnung zum Übertragen von Daten gemäß dem Oberbegriff des Patentanspruchs 1.

Zur Übertragung von Daten ist es allgemein bekannt, Fernschreibmaschinen zu verwenden, mittels denen über das weltweite Telexnetz mit hoher Dienstgüte wie Verfügbarkeit, Sicherheit und Anerkennung als juristisch gültige Übertragung Daten übertragen werden können und es ist bekannt, einen zusätzlichen Speicher vorzusehen, der ankommende Daten so lange speichert, bis nach einem Lokalbetrieb die Fernschreibmaschine wieder zur Ausgabe dieser Daten frei ist (DE-B-26 34 669).

Es ist auch möglich, mittels einer Zusatzeinrichtung an einer Zusatzschnittstelle, wie beispielsweise einer Fernmeldezusatzdose an einer Fernschreibmaschine ein Endgerät, wie beispielsweise einen Personal Computer (persönlichen Computer), ein Textsystem oder eine Datenverarbeitungsanlage an die Fernschreibmaschine anzuschließen. Am Fernschreibhauptanschluß hängt dann die Fernschreibmaschine und das Endgerät wird nur eingeschleift. Somit ist bei einer derartigen Lösung zusätzlich zu dem Endgerät eine vollständige Fernschreibmaschine und die Zusatzeinrichtung nötig.

Eine weitere Möglichkeit besteht darin, das Endgerät, wie beispielsweise den Personal Computer mit einer anderen Zusatzeinrichtung direkt an die Übertragungsstrecke anzuschließen. In diesem Fall kann aber die vom Fernschreibnetz bisher gewohnte Dienstgüte nur dann eingehalten werden, wenn zusätzlich zu dem Endgerät eine Fernschreibmaschine oder zumindest ein Monitordrucker angeschlossen wird. Nur in diesem Fall ist sichergestellt, daß ein Ausdruck empfangener Nachrichten auch dann möglich ist, wenn das Endgerät nicht verfügbar ist.

Die oben beschriebenen Einrichtungen erfordern einen verhältnismäßig großen Aufwand, mit dem die geforderte Dienstgüte erkauft werden muß.

Das gleiche gilt für eine weitere bekannte Anordnung, indem insbesondere in einem Telexnetz ein Mikrocomputer vorgesehen ist, der Programmspeicher zur Aufnahme und Abgabe von Daten in die Sende- oder Empfangsleitungen zwecks späterer Verbindung mit dem jeweiligen Endgerät -hier einem Fernschreiber- einschleift (DE-C-33 13 484).

Der Erfindung liegt daher die Aufgabe zugrunde, eine Anordnung zum Übertragen von Daten anzugeben, bei der unter Verwendung eines vorhandenen Erdgeräts eine Übertragung von Daten über eine Übertragungsstrecke, insbesondere ein Fernschreibnetz unter Beibehaltung einer sehr hohen Dienstgüte möglich ist.

Erfindungsgemäß wird die Aufgabe bei der Anordnung der eingangs genannten Art durch die im kennzeichnenden Teil des Patentanspruchs 1 angegebenen Merkmale gelöst.

Die Anordnung gemäß der Erfindung hat den Vorteil, daß die bei einem Endgerät vorhandenen Komponenten, wie Tastatur, Bildschirm, Drucker, externe Speicher und Steuereinheit auch für die Übertragung der Daten benutzt werden können. Durch die Verwendung der Übertragungseinheit werden die übertragungsspezifischen Aufgaben gelöst und zwar unter Beibehaltung der bisherigen Dienstgüte. Der Abschluß der Übertragungsstrecke wird dabei vom Endgerät unabhängig und es ist weder eine zusätzliche Fernschreibmaschine noch ein zusätzlicher Monitordrucker erforderlich.

Die Anordnung erweist sich insbesondere dann als zweckmäßig, wenn als Endgerät ein Personal Computer vorgesehen ist. In diesem Fall ist es günstig, wenn die Übertragungseinheit über jeweils eine übliche Schnittstelle mit der Ausgabeeinheit und dem Endgerät verbunden ist. Die Ausgabeeinheit ist in diesem Fall zweckmäßigerweise als Drucker ausgebildet. Dieser Drucker dient dann sowohl als Drucker für das Endgerät als auch als Drucker für die empfangenen Daten. Die Übertragungseinheit kann auch nur mit dem Drucker verbunden sein. In diesem Fall dienen der Drucker und die Übertragungseinheit ausschließlich als eine Empfangseinheit für die übertragenen Daten.

Als Drucker kann der bei einem Endgerät üblicherweise vorgesehene Drucker vorgesehen werden, wobei dann lediglich im Verbindungsweg zwischen einer Steuereinheit des Endgeräts und dem Drucker die Übertragungseinheit eingeschaltet wird.

Die Anordnung ist insbesondere dann vorteilhaft einsetzbar, wenn als Übertragungsstrecke eine Fernschreibübertragungsstrecke, beispielsweise eine Fernschreibleitung vorgesehen ist.

Um sicherzustellen, daß bei der lokalen Betriebsart des Endgeräts die Ausgabe von Daten auf der Ausgabeeinheit nicht gestört wird, ist es günstig, wenn die Übertragungseinheit einen Leitungsspeicher aufweist, in dem von der Übertragungsstrecke empfangene Daten solange speicherbar sind, solange das Endgerät mit der Ausgabeeinheit verbunden ist. Dieser Leitungsspeicher kann durch Akku-Pufferung gegen Netzausfall geschützt sein. Bei Rückkehr der Netzspannung werden noch im Speicher befindliche Daten zwangsweise ausgedruckt.

Da das Endgerät die Daten üblicherweise in einem Code empfängt und sendet, der von dem auf der Übertragungsstrecke verwendeten Code verschieden ist, ist es zweckmäßig, wenn die Übertragungseinheit einen Codewandler enthält, um vom Endgerät abgegebene Daten und/oder von der Übertragungsstrecke empfangene Daten jeweils in einen für die Übertragung bzw. Verarbeitung geeigneten Code umzusetzen. Dieser Code ist beispielsweise bei der Verwendung einer Fernschreibübertragungsstrecke als ein üblicher Fernschreibcode ausgebildet.

Zur Überprüfung der an die Übertragungsstrecke abgegebenen zu sendenden Daten ist es vorteilhaft, wenn diese in der Übertragungseinheit als empfangene Daten zurückgeschleift und an der Ausgabeeinheit ausgegeben werden.

Falls bei der Übertragung ein Austausch von Kennungen erforderlich ist, ist es günstig, wenn dieser Austausch nicht im Endgerät, sondern in der Übertragungseinheit durchgeführt wird und diese zu diesem Zweck einen Kennungsgeber enthält, der nach dem Empfang einer entsprechenden Aufforderung die der Kennung zugeordneten Daten abgibt.

Zur Steuerung des Wähl- und Übertragungsvorgangs ist es von Vorteil, wenn die Übertragungseinheit eine Auswertestufe enthält, die von dem Endgerät abgegebene Steuerzeichen auswertet und die Wähl- und Übertragungsvorgänge steuert.

Da die Übertragungsgeschwindigkeit der Daten auf der Übertragungsstrecke üblicherweise niedriger sein wird als die Übertragungsgeschwindigkeit, mit der die Daten vom Endgerät abgegeben werden, ist es zweckmäßig, wenn die Übertragungseinheit einen Pufferspeicher enthält, mittels dem die Übertragungsgeschwindigkeit der von dem Endgerät abgegebenen Daten an die Übertragungsgeschwindigkeit der Übertragungsstrecke anpaßbar ist.

Um das Endgerät nicht während des gesamten Ausgabevorgangs an der Ausgabeeinheit zu blockieren, ist es auch günstig, in der Übertragungseinheit einen weiteren Pufferspeicher (Spooling Puffer) vorzusehen.

Falls über die Übertragungsstrecke Daten empfangen werden und an der Ausgabeeinheit ausgegeben werden, wird dem Endgerät über eine Steuerleitung mitgeteilt, daß es zu diesem Zeitpunkt keine Daten auf der Ausgabeeinheit ausgeben kann.

Falls die Ausgabeeinheit von dem Endgerät beansprucht wird und zu diesem Zeitpunkt Daten über die Übertragungsstrecke empfangen werden, ist es zweckmäßig, in der Übertragungseinheit einen Pufferspeicher vorzusehen, der die Empfangsdaten aufnimmt.

Um sicherzustellen, daß beim Abschalten des Endgeräts weiterhin Daten empfangen werden können, wird vorgesehen, daß die Ausgabeeinheit eingeschaltet bleibt und die Übertragungsstrecke mit der Ausgabeeinheit verbunden bleibt.

Es erweist sich auch als zweckmäßig, in der Übertragungseinheit Bedienungshilfen, wie beispielsweise Vorrichtungen für eine automatische Wahl, für eine Wahlwiederholung oder eine Kurzwahl vorzusehen.

Die Übertragungseinheit wird üblicherweise in einem getrennten Gehäuse untergebracht sein. Es ist jedoch auch möglich, die Übertragungseinheit mit in das Endgerät, beispielsweise den Personal Computer oder in die Ausgabeeinheit zu integrieren, so daß diese eine bauliche Einheit mit den genannten Geräten bildet.

Ein Ausführungsbeispiel der Anordnung gemäß der Erfindung wird im folgenden anhand von Zeichnungen näher erläutert. Es zeigen

Fig. 1 ein Blockschaltbild einer ersten bekannten Ausführungsform einer Anordnung zur Übertragung von Daten,

Fig. 2 eine zweite Ausführungsform einer bekannten Anordnung zur Übertragung von Daten,

Fig. 3 ein Blockschaltbild einer Anordnung gemäß der Erfindung,

Fig. 4 ein detailliertes Blockschaltbild der Anordnung gemäß der Erfindung.

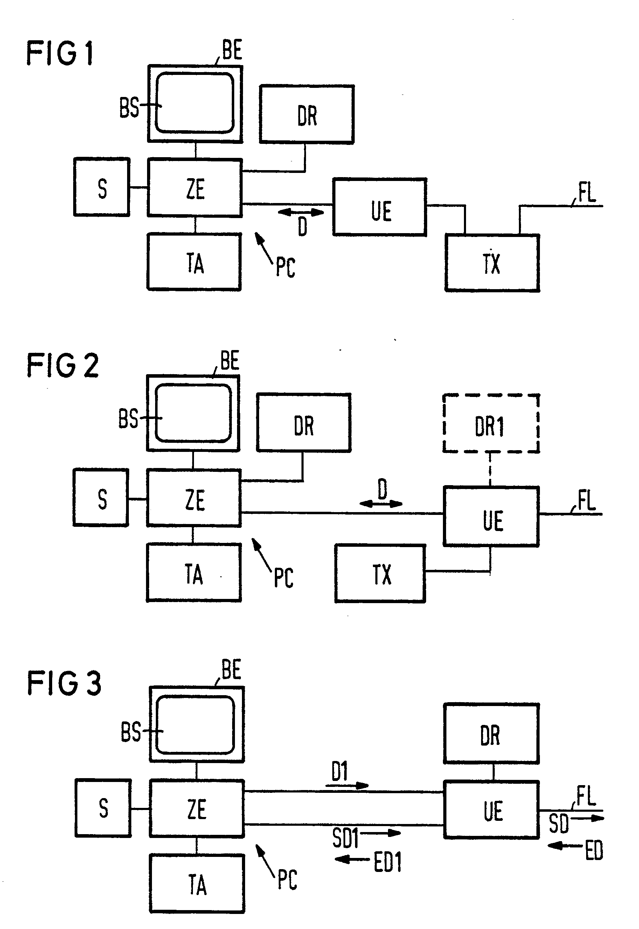

Bei der in Fig. 1 dargestellten ersten Ausführungsform einer Anordnung zum Übertragen von Daten ist an einer als Fernleitung FL ausgebildeten Übertragungsstrecke eine Fernschreibmaschine TX angeschlossen. An einem Zusatzausgang, beispielsweise der Fernmeldezusatzdose ist eine Übertragungseinheit UE angeschlossen, an der ihrerseits ein Endgerät PC, beispielsweise ein Personal Computer, eine Textbearbeitungseinrichtung oder eine Datenverarbeitungsanlage angeschlossen ist. Das Endgerät PC enthält eine Zentraleinheit ZE, an der eine mit einem Bildschirm BS versehene Bildschirmeinheit BE, eine Tastatur TA und eine als Drucker DR ausgebildete Ausgabeeinheit angeschlossen ist. Mit Hilfe des Endgeräts PC ist es möglich, zu übertragende Daten bereitzustellen, die dann über die Übertragungseinheit UE und die Fernschreibmaschine TX an die Fernleitung abgegeben werden. Diese Daten D werden bei der Erstellung auch auf dem Drucker DR abgedruckt. Ebenso ist es möglich, auf der Fernleitung FL empfangene Daten D über die Fernschreibmaschine TX und die Übertragungseinheit UE dem Endgerät PC zuzuführen und dort ebenfalls an dem Drucker DR auszugeben. Die Fernschreibmaschine TX ist erforderlich, um unabhängig von der Betriebsfähigkeit des Endgeräts PC, d. h. auch bei defektem oder ausgeschaltetem Endgerät PC einen Empfang möglich zu machen und einen eindeutigen Abschluß der Fernleitung FL zu gewährleisten.

Bei der in Fig. 2 dargestellten Anordnung ist an der als Fernleitung FL ausgebildeten Übertragungsstrecke eine Übertragungseinheit UE angeschlossen, die ebenfalls mit einem Endgerät PC, das wiederum vorzugsweise als Personal Computer ausgebildet ist, verbunden ist. Dieses Endgerät PC wird beispielsweise ebenfalls aus einer Zentraleinheit ZE, einer mit einem Bildschirm BS versehenen Bildschirmeinheit BE, einem Drucker DR, einer Tastatur TA und einem peripheren Speicher S gebildet. An der Übertragungseinheit UE ist weiterhin eine Fernschreibmaschine TX angeschlossen, die die dauernde Verfügbarkeit sicherstellt. Es ist auch möglich, an der Übertragungseinheit UE zusätzlich einen Monitordrucker DR anzuschließen, der die ankommenden und abgehenden Meldungen vollständig protokolliert. Bei Verzicht auf die hohe Dienstgüte können der Drucker DR1 und die Fernschreibmaschine TX entfallen.

Die in Fig. 2 dargestellte Anordnung erfordert einen verhältnismäßig großen Aufwand, da zur Aufrechterhaltung der gewünschten Dienstgüte viele Komponenten erforderlich sind. Insbesondere ist bei dieser Anordnung, ebenso wie bei der in Fig. 1 gezeigten Anordnung eine Fernschreibmaschine TX zusätzlich zum Endgerät PC erforderlich.

Bei der in Fig. 3 gezeigten Anordnung ist an der Übertragungsstrecke FL ebenfalls eine Übertragungseinheit UE angeschlossen, jedoch ist keine Fernschreibmaschine erforderlich, sondern an der Übertragungseinheit UE ist eine insbesondere als Drucker DR ausgebildete Ausgabeeinheit vorgesehen, der jedoch sowohl als Drucker zum Protokollieren der zu sendenden Sendedaten SD und der empfangenden Empfangsdaten ED als auch als Drucker für das Endgerät PC dient. Das Endgerät PC, das wiederum vorzugsweise als Personal Computer ausgebildet ist, ist mit der Übertragungseinheit UE verbunden. Im Gegensatz zu den in den Fig. 1 und 2 dargestellten Endgeräten PC ist bei dem in Fig. 3 dargestellten Endgerät PC kein eigener Drucker erforderlich und jenes braucht beispielsweise nur aus der Zentraleinheit ZE, der mit dem Bildschirm BS versehenen Bildschirmeinheit BE, der Tastatur TA und dem Speicher S versehen sein. An den Drucker DR werden somit von dem Endgerät PC auch Daten D1 abgegeben, die bei der lokalen Betriebsweise des Endgeräts PC anfallen. In der Übertragungseinheit UE ist eine Umschalteinheit vorgesehen, die wahlweise die Sendedaten SD1, die Empfangsdaten ED oder die vom Endgerät PC abgegebenen Daten D1 dem Drucker DR zuführt.

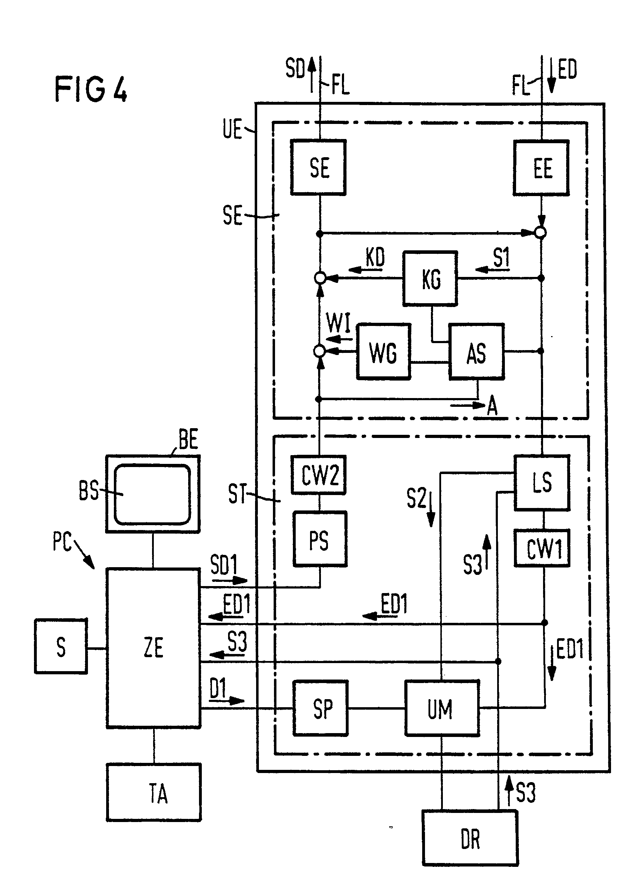

Die in Fig. 4 dargestellte Übertragungseinheit UE dient als vollwertiger Leitungsabschluß und enthält eine Sende/Empfangseinheit SE, die mit der beispielsweise als Fernschreibleitung FL ausgebildeten Übertragungsstrecke verbunden ist und die den Leitungsabschluß in gewohnter Dienstgüte sicherstellt und die Wähl- und Übertragungsprozeduren ausführt. Weiterhin enthält die Übertragungseinheit UE eine Steuereinheit ST, in der insbesondere eine Umschalteinheit UM vorgesehen ist, die die zu sendenden Sendedaten SD, die empfangenen Empfangsdaten ED oder die bei der lokalen Betriebsweise von dem Endgerät PC abgegebenen Daten D1 dem Drucker DR zuführt.

Während der lokalen Betriebsweise, in der das Endgerät PC in bekannter Weise benutzt wird und kein Datenaustausch über die Übertragungsstrecke FL erfolgt, können vom Endgerät PC abgegebene Daten D1 über die Umschalteinheit UM in der Steuereinheit ST an dem Drucker DR ausgegeben werden. In der Steuereinheit ST kann ein Speicher SP vorgesehen sein, um einen sogenannten Spooling Prozeß auszuführen, d. h. das Endgerät PC muß nicht während des gesamten Druckvorgangs blockiert sein.

Wenn gleichzeitig mit der lokalen Betriebsweise des Endgeräts PC über die Übertragungsstrecke FL Empfangsdaten ED empfangen werden, gelangen diese über eine Empfangseinheit EE in einen Leitungsspeicher LS. Bei der Verwendung der Übertragungseinheit UE für eine Fernschreibübertragung werden auch einem Kennungsgeber KG Steuersignale S1 zugeführt, die diesen zur Abgabe einer Kennung auffordern. Der Kennungsgeber KG gibt Kennungsdaten KD über eine Sendeeinheit SE als Sendedaten SD an den fernen Teilnehmer. Anschließend werden die Empfangsdaten ED übertragen und in dem Leitungsspeicher LS gespeichert. Wenn der Leitungsspeicher LS voll wird, besteht einerseits die Möglichkeit, der sendenden Teilnehmerstelle mitzuteilen, daß die Übertragungseinheit UE nicht mehr empfangsbereit ist, was beispielsweise durch ein Signal erfolgen kann, das das Ende eines Aufzeichnungsträgers vortäuscht. Es besteht auch die Möglichkeit, dem Endgerät PC durch ein Steuersignal S2 mitzuteilen, daß die lokale Betriebsweise unterbrochen werden soll, so daß die Umschalteinheit UM den Leitungsspeicher LS mit dem Drucker DR verbindet, um zwangsweise die Daten aus dem Leitungsspeicher LS an dem als Ausgabeeinheit dienenden Drucker DR auszudrucken. Die Empfangsdaten ED1 werden dann einerseits über die Umschalteinheit UM dem Drucker DR zugeführt und können andererseits auch dem Endgerät PC zugeführt und dort beispielsweise in dem Speicher S gespeichert oder an der Bildschirmeinheit BE angezeigt werden.

Häufig ist bei einer lokalen Betriebsweise des Endgerätes PC kein Drucker DR erforderlich. In diesem Fall können die über die Übertragungsstrecke FL empfangenen Daten sofort am Drucker DR ausgegeben werden. Das Endgerät PC hat während dieser Zeit keinen Zugriff zum Drucker DR bis die Übertragung der Daten abgeschlossen ist, so daß das Protokoll nicht unterbrochen wird.

Da, beispielsweise bei dem Anschluß der Übertragungseinheit UE an eine Fernschreibleitung FL die Empfangsdaten ED entsprechend einem Fernschreibcode codiert sind und das Endgerät PC üblicherweise mit einem anderen Code arbeitet, ist in der Steuereinheit ST zweckmäßigerweise ein Codewandler CW1 vorgesehen, der die über die Übertragungsstrecke FL empfangenen Empfangsdaten ED einer Codewandlung unterwirft, so daß die Empfangsdaten ED1 ohne weiteres der Zentraleinheit ZE zugeführt werden können. Das könnte z. B. dadurch erreicht werden, daß der Drucker DR über die Übertragungseinheit UE mit Netzstrom versorgt wird. In diesem Fall ist an der Übertragungseinheit UE eine Ausgangsdose angebracht.

Bei der Verwendung der Anordnung zum Senden von Daten, beispielsweise als sendende Fernschreibmaschine werden die Daten von der Tastatur TA oder aus dem Speicher S als Sendedaten SD1 einem in der Steuereinheit ST vorgesehenen Pufferspeicher PS zugeführt. Der Pufferspeicher PS dient in erster Linie zur Umwandlung der Übertragungsgeschwindigkeit, da normalerweise die Sendedaten SD1 mit einer höheren Übertragungsgeschwindigkeit abgegeben werden, als sie als Sendedaten SD über die Übertragungsstrecke FL übertragen werden können, insbesondere dann, wenn diese als Fernschreibleitung ausgebildet ist. In diesem Fall muß in der Steuereinheit ST auch ein Codewandler CW2 vorgesehen sein, der die Sendedaten SD1 in einen für die Übertragung geeigneten Code, beispielsweise den Fernschreibcode umsetzt.

Vor der Übertragung der Daten empfängt eine Auswertestufe AS entsprechende Steuersignale SV zur Herstellung der Verbindung zu dem fernen Teilnehmer. Die Auswertestufe AS kann einerseits in einem Wählsignalgeber WG die Erzeugung von Wählimpulsen WI auslösen, falls beispielsweise der ferne Teilnehmer unter Verwendung einer Nummernimpulswahl ausgewählt wird. Andernfalls erzeugt der Wählsignalgeber WG Codewahlsignale. Er kann auch mit einer automatischen Wähleinrichtung, einer Einrichtung für Wahlwiederholung und/oder einer Einrichtung für Kurzwahl ausgestattet sein. Die Auswertestufe AS kann auch den Kennungsgeber KG auslösen, so daß bei einem Kennungsaustausch die Kennungsdaten KD über die Sendeeinheit SE ausgesendet werden. Die Kennung ist also nicht in dem Endgerät PC, sondern in der Übertragungseinheit UE abgelegt. Wenn nach der Herstellung der Verbindung zu dem fernen Teilnehmer die Sendedaten SD übertragen werden, werden diese von dem Endgerät PC über den Pufferspeicher PS und den Codewandler CW2 sowie über die Sendeeinheit SE an die Übertragungsstrecke FL abgegeben.

Das Protokollieren der Sendedaten SD bzw. SD1 kann einerseits dadurch erfolgen, daß die Sendedaten SD1 unmittelbar oder über den Pufferspeicher PS und die Umschalteinheit UM zum Drucker DR durchgeschaltet werden. Es ist auch möglich, die Sendedaten SD1 nach der Codeumwandlung auf die Empfangsseite zurückzuschleifen und dort in entsprechender Weise wie die Empfangsdaten ED zu behandeln und über die Umschalteinheit UM dem Drucker DR zuzuführen. Die zurückgeschleiften Sendedaten SD müssen dabei nicht unbedingt über den Leitungsspeicher LS geführt werden.

Wenn die Anordnung in einem Übertragungszustand über die Übertragungsstrecke FL empfangene Daten ED empfängt und das Endgerät PC abgeschaltet oder nicht betriebsbereit ist, werden nach dem Austausch der Kennung unter Verwendung des Steuersignals SV die Empfangsdaten ED dem Leitungsspeicher LS zugeführt. Da das Endgerät PC nicht betriebsbereit ist, ist die Umschalteinheit UM derart eingestellt, daß im Leitungsspeicher LS eingehende Empfangsdaten ED sofort an dem Drucker DR ausgedruckt werden. Zu diesem Zweck gelangen die Empfangsdaten ED über den Codewandler CW1 als Empfangsdaten ED1 zur Umschalteinheit UM und von dieser zum Drucker DR. Es ist auch möglich, die Empfangsdaten ED unter Umgehung des Leitungsspeichers LS als Empfangsdaten ED1 der Umschalteinheit UM zuzuführen. Der Drucker DR muß somit, um die hohe Verfügbarkeit zu garantieren, auch dann eingeschaltet bleiben, wenn das Endgerät PC abgeschaltet wird, so daß die Empfangsdaten ED1 sofort ausgedruckt werden können.

Falls das Endgerät PC betriebsbereit ist, werden die Empfangsdaten ED1 auch der Zentraleinheit ZE zugeführt, so daß sie in dem Speicher S gespeichert oder an dem Bildschirm BS angezeigt werden können.

Falls der Drucker DR nicht betriebsbereit ist, wird ein Steuersignal S3 erzeugt und dem Endgerät PC sowie dem Leitungsspeicher LS zugeführt. In diesem Fall gelangen die Empfangsdaten ED nur in den Leitungsspeicher LS. Ein Ausgeben von Daten des Endgeräts PC an dem Drucker DR ist damit auch nicht möglich, jedoch kann das Endgerät PC Daten beispielsweise an den Speicher SP abgeben, um sogenannte Spooling Aufträge zum anschließenden Ausdrucken zu erteilen.

Die Zentraleinheit ZE des Endgeräts PC und der Drucker DR werden zweckmäßigerweise über allgemein bekannte und gegebenenfalls nachrüstbare Schnittstellen, beispielsweise die V24 Schnittstelle mit der Übertragungseinheit UE verbunden. Beispielsweise kann das Protokoll dann nach S.19 ablaufen. Über die Leitungen 102.8 kann ein Signal "Fernschreibmaschine nicht bereit/bereit" gemeldet werden und über eine Leitung 107 kann ein Signal "Endgerät PC ein/aus" übertragen werden. Die Ausführungen der Schnittstellen zum Drucker DR und zum Endgerät PC können dabei variabel realisiert werden und z. B. alternativ als parallele oder serielle Schnittstelle ausgebildet werden.

Wie bereits erwähnt, können in dem Wählsignalgeber WG Zusatzeinrichtungen vorgesehen sein, die eine automatische Wahl, eine Kurzwahl oder eine Wahlwiederholung durchführen. Diese Zusatzeinrichtungen werden zweckmäßigerweise über das Endgerät PC durch Steuerzeichen angestoßen.

Die Übertragungseinheit UE muß nicht als eine selbständige Einheit in einem eigenen Gehäuse untergebracht werden, sondern sie kann auch baulich mit dem Endgerät PC oder mit dem Drucker DR eine Einheit bilden.

**Patentansprüche**

1. Anordnung zum Übertragen von Daten unter Verwendung eines als Personalcomputer mit Tastatur ausgebildeten Endgerätes (PC), mit einer an eine Übertragungsstrecke (FL) angeschlossenen Übertragungseinheit (UE) und einer als Drucker ausgebildeten Ausgabeeinheit (DR), wobei im Übertragungszustand das Endgerät (PC) über die Übertragungseinheit (UE) mittels einer in der Übertragungseinheit (UE) enthaltenen Steuereinheit (ST) mit der Übertragungsstrecke (FL) verbunden ist, **dadurch gekennzeichnet,** daß die Ausgabeeinheit (DR) über die Tastatur des Endgerätes (PC) bedient werden kann und als Ausgabeeinheit (DR) für den Lokalbetrieb des Endgerätes (PC) dient, und daß die Steuereinheit (ST) derart ausgebildet ist, daß sie im Bedarfsfall im Übertragungszustand auch bei einer lokalen Betriebsweise des Endgerätes (PC) oder falls das Endgerät (PC) abgeschaltet bzw. nicht betriebsbereit ist, die Übertragungsstrecke (FL) mit der Ausgabeeinheit (DR) verbindet, oder falls diese (DR) durch das Endgerät (PC) belegt ist, die Übertragungsstrecke (FL) mit einem Leitungsspeicher (LS) verbindet, in dem die von der Übertragungsstrecke (FL) empfangenen Daten solange gespeichert bleiben, bis das Endgerät (PC) und die Ausgabeeinheit (DR) oder nur die Ausgabeeinheit (DR) zur Aufnahme der gespeicherten Daten freigeschaltet sind.

2. Anordnung nach Anspruch 1, **dadurch gekennzeichnet,** daß der Drucker (DR) Bestandteil des Endgeräts (PC) ist.

3. Anordnung nach einem der Ansprüche 1 und 2, **dadurch gekennzeichnet,** daß die Übertragungsstrecke (FL) als Fernschreibleitung ausgebildet ist.

4. Anordnung nach einem der Ansprüche 1 bis 3, **dadurch gekennzeichnet,** daß die Steuereinheit (ST) Codewandler (CW) enthält, die die vom Endgerät (PC) abgegebenen Daten und/oder die von der Sende/Empfangseinheit (SE) abgegebenen Daten jeweils in eine für die Übertragung über die Übertragungsstrecke (FL) bzw. für die Verarbeitung im Endgerät (PC) und/oder in der Ausgabeeinheit (DR) geeignete Codes umsetzt.

5. Anordnung nach einem der Ansprüche 1 bis 4, **dadurch gekennzeichnet,** daß die Sende/Empfangseinheit (SE) die von der Steuereinheit (ST) abgegebenen zu sendenden Daten (SD1) als empfangene Daten (ED1) zurückschleift und wieder der Steuereinheit (ST) zuführt.

6. Anordnung nach einem der Ansprüche 1 bis 5, **dadurch gekennzeichnet,** daß die Sende/Empfangseinheit (SE) einen Kennungsgeber (KG) enthält, der nach dem Empfang eines entsprechenden Aufforderungssignals ein einer Kennung zugeordnete Daten (KD) abgibt.

7. Anordnung nach einem der Ansprüche 1 bis 6, **dadurch gekennzeichnet,** daß die Sende/Empfangseinheit (SE) eine Auswertestufe (AS) enthält, die von dem Endgerät (PC) abgegebene Steuerzeichen (A) auswertet und einen Wähl- und Übertragungsvorgang steuert.

8. Anordnung nach einem der Ansprüche 1 bis 7, **dadurch gekennzeichnet,** daß die Steuereinheit (ST) einen Pufferspeicher (PS) enthält, mittels dem die Übertragung der von dem Endgerät (PC) abgegebenen Daten an die Übertragungsgeschwindigkeit der zu sendenden Daten (SD) über die Übertragungsstrecke (FL) angepaßt wird.

9. Anordnung nach einem der Ansprüche 1 bis 8, **dadurch gekennzeichnet,** daß das Endgerät (PC) mit der Steuereinheit (ST) über eine Steuerleitung verbunden ist, über die dem Endgerät (PC) mitgeteilt wird, daß die Ausgabeeinheit (DR) für den lokalen Betriebszustand nicht zur Verfügung steht.

10. Anordnung nach einem der Ansprüche 1 bis 9, **dadurch gekennzeichnet,** daß die Steuereinheit (ST) die Ausgabeeinheit (DR) mit dem Speicher (LS) zwangsweise verbindet, wenn dieser voll ist.

11. Anordnung nach einem der Ansprüche 1 bis 10, **dadurch gekennzeichnet,** daß beim Abschalten des Endgeräts (PC) die Ausgabeeinheit (DR) eingeschaltet bleibt und die Steuereinheit (ST) die Sende/ Empfangseinheit (SE) mit der Ausgabeeinheit (DR) verbindet.

12. Anordnung nach einem der Ansprüche 1 bis 11, **dadurch gekennzeichnet,** daß die Sende/Empfangseinheit (SE) zusätzliche Wählhilfen für eine automatische Wahl, Wahlwiederholung und/oder eine Kurzwahl enthält, die durch das Endgerät (PC) ansteuerbar sind.

**Claims**

1. Arrangement for the transmission of data, using a terminal (PC) constructed as personal computer with keyboard, comprising a transmission unit (UE) connected to a transmission link (FL) and an output unit (DR) constructed as printer, in which arrangement, in the transmission state, the terminal (PC) is connected to the transmission link (FL) via the transmission unit (UE) by means of a control unit (ST) contained in the transmission unit (UE), characterised in that the output unit (DR) can be operated via the keyboard of the terminal (PC) and is used as output unit (DR) for the local operation of the terminal (PC), and in that the control unit (ST) is constructed in such a manner that, in the transmission state, it also connects the transmission link (FL) to the output unit (DR), if necessary, even when the terminal (PC) is in a local operating mode or if the terminal (PC) is switched off or not ready for operation, or, if this output unit (DR) is occupied by the terminal (PC), connects the transmission link (FL) to a line buffer (OS) in which the data received from the transmission link (FL) remain stored until the terminal (PC) and the output unit (DR) or only the output unit (DR) are released for accepting the stored data.

2. Arrangement according to Claim 1, characterised in that the printer (DR) is a component of the terminal (PC).

3. Arrangement according to one of Claims 1 and 2, characterised in that the transmission link (FL) is constructed as teletype line.

4. Arrangement according to one of Claims 1 to 3, characterised in that the control unit (ST) contains code converters (CW) which convert the data output by the terminal (PC) and/or the data output by the transmitting/receiving unit (SE) in each case into a code suitable for transmission via the transmission link (FL) or for processing in the terminal (PC) and/or in the output unit (DR).

5. Arrangement according to one of Claims 1 to 4, characterised in that the transmitting/receiving unit (SE) loops back, and supplies back to the control unit (ST) as received data (ED1), the data (SD1) to be transmitted and output by the control unit (ST).

6. Arrangement according to one of Claims 1 to 5, characterised in that the transmitting/receiving unit (SE) contains an identification transmitter (KG) which, after receiving a corresponding request signal, outputs data (KD) associated with an identification.

7. Arrangement according to one of Claims 1 to 6, characterised in that the transmitting/receiving unit (SE) contains an evaluating stage (AS) which evaluates control characters (A) output by the terminal (PC) and controls a dialling and transmission process.

8. Arrangement according to one of Claims 1 to 7, characterised in that the control unit (ST) contains a buffer store (PS) by means of which the transmission of the data output by the terminal (PC) is adapted to the transmission speed of the data (SD) to be transmitted via the transmission link (FL).

9. Arrangement according to one of Claims 1 to 8, characterised in that the terminal (PC) is connected to the control unit (ST) via a control line via which the terminal (PC) is informed that the output unit (DR) is not available for the local operating mode.

10. Arrangement according to one of Claims 1 to 9, characterised in that the control unit (ST) mandatorily connects the output unit (DR) to the buffer (LS) if the latter is full.

11. Arrangement according to one of Claims 1 to 10, characterised in that, when the terminal (PC) is switched off, the output unit (DR) remains switched on and the control unit (ST) connects the transmitting/receiving unit (SE) to the output unit (DR).

12. Arrangement according to one of Claims 1 to 11, characterised in that the transmitting/receiving unit (SE) contains additional dialling aids for automatic dialling, last-number redialling and/or abbreviated dialling, which can be activated by the terminal (PC).

**Revendications**

1. Dispositif pour la transmission de données moyennant l'utilisation d'un terminal (PC) agencé sous la forme d'un ordinateur personnel comportant un clavier, et comportant une unité de transmission (UE) raccordée à une section de transmission (FL), et une unité de sortie (DR) agencée sous la forme d'une imprimante, et dans lequel, dans l'état de transmission, le terminal (PC) est raccordé à la section de transmission (FL) par l'intermédiaire de l'unité de transmission (UE) et au moyen d'une unité de commande (ST) contenue dans l'unité de transmission (UE), caractérisé par le fait que l'unité de sortie (DR) peut être commandée par l'intermédiaire du clavier du terminal (PC) et est utilisée comme unité de sortie (DR) pour le fonctionnement local du terminal (PC), et que l'unité de commande (ST) est agencée de telle sorte que le cas échéant, dans l'état de transmission, même dans le cas d'un fonctionnement local du terminal (PC) ou dans le cas où le terminal (PC) est débranché ou n'est pas prêt à fonctionner, l'unité de commande relie la section de transmission (FL) à l'unité de sortie (DR) ou, dans le cas où cette unité (DR) est occupée par le terminal (PC), l'unité de commande relie la section de transmission (FL) à une mémoire de ligne (LS), dans laquelle les données reçues par la section de transmission (FL) restent mémorisées jusqu'à ce que le terminal (PC) et l'unité de sortie (DR) ou seule l'unité de sortie (DR) sont libérées pour la réception des données mémorisées.

2. Dispositif selon la revendication 1, caractérisé par le fait que l'imprimante (DR) fait partie du terminal (PC).

3. Dispositif suivant l'une des revendications 1 et 2, caractérisé par le fait que la section de transmission (FL) est réalisée sous la forme d'une ligne de télescripteur.

4. Dispositif suivant l'une des revendications 1 à 3, caractérisé par le fait que l'unité de commande (ST) contient un convertisseur de code (CW) qui convertit les données délivrées par le terminal (PC) et/ou les données délivrées par l'unité d'émission/réception (SE), respectivement en un code convenant pour la transmission par l'intermédiaire de la section de transmission (FL) ou pour le traitement dans le terminal (PC) et/ou dans l'unité de sortie (DR).

5. Dispositif selon l'une des revendications 1 à 4, caractérisé en ce que l'unité d'émission/réception (SE) renvoie en boucle, en tant que données reçues (ED1), les données à émettre (SD1), délivrées par l'unité de commande (ST) et les envoie à nouveau à cette unité.

6. Dispositif suivant l'une des revendications 1 à 5, caractérisé par le fait que l'unité d'émission/réception (SE) contient un générateur d'indicatifs (KG), qui après la réception d'un signal de demande correspondant, délivre des données (KD) associées à un indicatif.

7. Dispositif suivant l'une des revendications 1 à 6, caractérisé par le fait que l'unité d'émission/réception (SE) contient un étage d'évaluation (AS), qui évalue des signaux de commande (A) délivrés par le terminal (PC) et commande une opération de sélection et de transmission.

8. Dispositif suivant l'une des revendications 1 à 7, caractérisé par le fait que l'unité de commande (ST) contient une mémoire tampon (PS), au moyen de laquelle la transmission des données délivrées par le terminal (PC) est adaptée à la vitesse de transmission des données devant être émises (SD), par l'intermédiaire de la section de transmission (FL).

9. Dispositif suivant l'une des revendications 1 à 8, caractérisé par le fait que le terminal (PC) est raccordé à l'unité de commande (ST) par l'intermédiaire d'une ligne de commande, au moyen de laquelle est communiqué au terminal (PC) le fait que l'unité de sortie (DR) n'est pas disponible pour l'état de fonctionnement local.

10. Dispositif suivant l'une des revendications 1 à 9, caractérisé par le fait que l'unité de commande (ST) relie de façon impérative l'unité de sortie (DR) à la mémoire (LS), lorsque cette dernière est pleine.

11. Dispositif suivant l'une des revendications 1 à 10, caractérisé par le fait que lors du débranchement du terminal (PC), l'unité de sortie (DR) reste branchée et l'unité de commande (ST) relie l'unité d'émission/réception (SE) à l'unité de sortie (DR).

12. Dispositif suivant l'une des revendications 1 à 11, caractérisé par le fait que l'unité d'émission/réception (SE) contient des systèmes auxiliaires de sélection pour une sélection automatique, une répétition de la sélection et/ou une sélection abrégée, qui peuvent être commandées par le terminal (PC).

## FIG 1

BE

BS

DR

S — ZE

D

UE

FL

TA

PC

TX

## FIG 2

BE

BS

DR

DR1

S — ZE

D

UE

FL

TA

PC

TX

## FIG 3

BE

BS

DR

S — ZE

D1

UE

FL

SD1

SD

TA

PC

ED1

ED

FIG 4